# EUROPEAN PATENT APPLICATION

(11) **EP 4 056 411 A1**
(43) Date of publication of application: **14.09.2022**
(21) Application number: 21305280.6
(22) Date of filing: 09.03.2021
(51) Int. Cl.: B60L 53/30, B60L 53/65, B60L 53/66, G06Q 20/14

(54) **DETERMINATION OF ELECTRICITY PROVISIONING POLICY**

(71) Applicant: Thales DIS France SA, 92190 Meudon (FR)
(72) Inventor: GIRARD, Pierre, 13881 Gémenos Cedex (FR); PARIS, Jean-Sébastien, 13881 Gémenos Cedex (FR)
(74) Representative: Thomas, Christine Marie Catherine

(57) **Abstract**

The present invention relates to an electric device (ED) having a connector (DC) to be connected, for electricity provisioning, to an electricity network (EN) having an intelligent module (IM), said electric device (ED) having further at least a secure electronic container (SC) adapted to be connected to the intelligent module (IM) of the electricity network (EN) when the electric device (ED) is connected to the electricity network (EN), said secure electronic container (SC) storing characteristics (CH) of the electric device (ED) to be transmitted to the intelligent module (IM) when the electric device (ED) is connected to the electricity network (EN), said characteristics (CH), once transmitted, being processed by the intelligent module (IM) to determine an electricity provisioning policy to be applied to the electricity provisioning subsequent to the connection of the electric device (ED) for electricity provisioning.

## Description

### FIELD OF THE INVENTION

The present invention relates to an electric device having connector to be connected, for electricity provisioning, to an electricity network having an intelligent module.

The invention also pertains to an intelligent module implemented in an electricity network, said intelligent module being adapted to connect to an electric device having a connector to connect to the electricity network.

It also relates to a method to determine an electricity provisioning policy to be applied to the electricity provisioning subsequent to a connection to an electricity network of an electric device having a connector.

### BACKGROUND OF THE INVENTION

In next years, electric vehicles (EV) are poised to replace completely Internal Combustion Engine (ICE) vehicles in many countries as governments have already passed laws to phase-out the ICE, e.g. 2030 in the Netherland.

In parallel, charging infrastructure is created in particular with charge points (CP) in public places. These policies are motivated by air pollution and greenhouse gas emissions reduction.

However, switching the fleet from ICE to EV will be just one part as the solution. One of the main remaining issue will be to scale-up the electricity generation system in a decarbonized way to cope with this massive additional demand of electricity.

This tremendous need of electricity comes in addition with all other needs that are also exponentially growing with the increasing needs of individuals, at home, at work and in any areas of the contemporary life. Electric heaters, data centers, high electricity consuming everyday objects.

Besides increasing the offer, reducing the electricity demand will be key to solve the problem. For EVs on way to reduce energy consumption is push for a fleet of smaller, simpler, lighter and slower vehicles.

All other electricity consuming objects are also concerned by the need to reduce electricity consumption.

The usual levers of public policy could be used to achieve this goal: influencing social behavior, regulation and taxes.

Regarding taxes, increasing the price of electricity for an EV or an heater for example according to some of its characteristics may be desirable as applying carbon tax in a non-discriminatory has already raised a problem of social acceptance.

Further alternative and advantageous solutions than the regular electricity provisioning would, accordingly, be desirable in the art.

### SUMMARY OF THE INVENTION

The present invention aims at enabling to adjust the electricity provisioning according to the object to be provisioned.

The present invention is defined, in its broadest sense, as an electric device having connector to be connected, for electricity provisioning, to an electricity network having an intelligent module, said electric device having further at least a secure electronic container adapted to be connected to the intelligent module of the electricity network when the electric device is connected to the electricity network, said secure electronic container storing characteristics of the electric device to be transmitted to the intelligent module when the electric device is connected to the electricity network, said characteristics, once transmitted, being processed by the intelligent module to determine an electricity provisioning policy to be applied to the electricity provisioning subsequent to the connection of the electric device for electricity provisioning.

The invention enables to modify the electricity provisioning policy as a function of characteristics of the electric device. Any device connected to a local electricity provisioning network can be a device of the invention. In this case, the intelligent module of the provisioning network would be implemented in an individual house meter.

It is here noted that the invention enables not to rely on regulation to allow/prohibit electric devices that would present too high energy consumption. The invention is more based on incitation or dis-incitation by adapting electricity provisioning policy.

For the case of the EV, this invention thus proposes an enhancement of the plug and charge protocol for electric vehicles in order to introduce a variable charging policy including electricity cost depending on the vehicle characteristics such as its mass, range, type of batteries, etc... The invention here adds to the vehicle its physical characteristics in a secure way. The invention then use these data as an input to a charging policy which is running into a charging point (CP). The charging policy then give the conditions of the loading session: price, duration, priority, etc...

According to an advantageous feature of the invention, the stored characteristics are permanent and unalterable data verified by an authority.

This feature avoids tampering or modification of the concerned data by anyone else than the authority. Typically, for an EV, initial issuance of the vehicle characteristics is under the control of the car manufacturer. It will be a signed set of data linked to a Vehicle Identification Number (VIN) and a model type. Characteristics of model type are validated during the type approval process. Typically the characteristics, the VIN and the model type will be digitally signed by a car manufacturer, being an authority in the acceptance of the invention and/or an official public authority approving the model type for a given geographical area.

In an advantageous application, as presented below, said electric device being a vehicle having electricity motorization, the intelligent module of the electric network is a charging station and the electricity provisioning policy is a charging policy to be applied by the charging station to the charge subsequent to the connection of the electric vehicle.

This application is particularly advantageous as EV have a very important need of electricity and will likely be, in the next year, the first electricity consumer object.

According to different implementations, the secure electronic container is connected to the intelligent module via one of the following technology:
- Bluetooth,
- PLC (Power Line Communication),
- Wifi,
- Ultra wide band,
- Wireless USB.

Such technologies enable data exchanges and the list is not to be considered as exhaustive. A CPL data exchange uses already existing plugs. The Bluetooth technology, as being wireless, is very adapted in context where adding a physical connection for only data exchange would not be desirable.

According to advantageous features, concerning the EV application, stored characteristics of the electric device includes at least one of the following:
- Mass of the vehicle,
- Battery type,
- Number of passengers,
- Max freight mass,
- Special purpose of the vehicle, typically an emergency vehicle,
- Maximal speed.

Such characteristics are typically the ones, in the application of the EV that would be useful to determine a charging policy. Again this list is not to be considered as exhaustive

Advantageously, authentication and identification data are also stored in the electric device for a mutual authentication of the electric device and of the electricity network.

This feature corresponds, for example, to the plug and charge standard for EV. Of course other context as plug and charge one can also implement such authentication and identification data. Indeed, here, most of the time, the electricity network terms designates the charging station itself. It will enable the vehicle to be sure that it communicates with a real charging station of the electricity network.

According to an advantageous feature, said secure electronic container stores the authentication and identification data that are also transmitted to the intelligent module when the electric device is connected to the electricity network, said intelligent module having cryptographic means adapted to process authentication and identification data to perform mutual authentication with the electric device identified by the identification data.

The storage of the authentication and identification data in the secure electronic container permits a same single secure area to be implemented to make the authentication/identification and the invention.

According to an additional feature, customer data are also stored in the electric device for further customization of the electricity provisioning.

Such customer data stored in the electric device can also intervene in addition to characteristics of the electric device to determine the electricity provisioning.

Such customer data can be preferences of the user or any data that could be modified in a less strict way than the characteristics used in the invention.

Such customization data can indeed be offered to be modified by the user of the electric device or by an eMobility Service Provider (eMSP as per the ISO 15118 vocabulary) which is the entity billing the user for charging. It is possible for these customer data to intervene at the level of the determination of the electricity provisioning policy or in another area of the electricity provisioning, for example in relation with a loyalty account.

According to an advantageous feature, said secure electronic container stores the customer data that are also transmitted to the intelligent module when the electric device is connected to the electricity network, said intelligent module further processing the customer data to determine the electricity provisioning policy.

Here the customer data are thus directly used to determine the policy of the electricity provisioning.

The invention also relates to an intelligent module implemented in an electricity network, said intelligent module being adapted to connect to a secure electronic container of an electric device having a connector to connect to the electricity network, when the electric device is connected to the electricity network, said intelligent module being adapted to:
- retrieve characteristics of the electric device from said secure electronic container when the electric device is connected to the electricity network,
- process retrieved characteristics of the electric device to determine an electricity provisioning policy to be applied to the electricity provisioning subsequent to the connection of the electric device for electricity provisioning.

Such an intelligent module being a major component of the invention enables the electricity provisioning network to deal with what is retrieved from any secure electronic container of an electric device to determine an electricity provisioning policy.

According to an advantageous further feature, electric device further storing authentication and identification data, said intelligent module is adapted to further retrieve the authentication and identification data, said intelligent module further having cryptographic means to perform mutual authentication with the electric device identified by the identification data.

This feature enables a previous authentication of the vehicle, said authentication being possibly determined as essential before the determination of the electricity provisioning policy is performed.

Advantageously, for further customization of the electricity provisioning, said electric device further storing customer data, said intelligent module is adapted to further retrieve the customer data, said intelligent module further processing the customer data to determine the electricity provisioning policy.

The invention concerns at last a method to determine an electricity provisioning policy to be applied to the electricity provisioning subsequent to a connection to an electricity network of an electric device having a connector and at least a secure electronic container storing characteristics of the electric device, said electricity network having further an intelligent module, said method comprising the steps of, once the electric device is connected to the electricity network with the connector:
- connection of the intelligent module of the electricity network with the secure electronic container of the electric device, once the connector of the electric device is connected to the electricity network for electricity provisioning,
- transmission of the characteristics from said secure electronic container to the intelligent module,
- processing transmitted characteristics by the intelligent module,
- determining, according to the processing of the transmitted characteristics, an electricity provisioning policy to be applied to the electricity provisioning subsequent to the connection of the electric device for electricity provisioning.

Such a method enables the determination of any electricity provisioning policy while taking into account characteristics associated to the electric device. As seen before, this is particularly interesting for high consuming devices, like EV, heaters etc.

Advantageously, said electric device further storing authentication and identification data and said intelligent module having cryptography means, said method further comprises the following preliminary steps, once the electric device is connected to the electricity network with the connector:
- transmitting, to the intelligent module, the authentication and identification data at the electric device,
- using the authentication and identification data, performing a mutual authentication with the electric device as identified by the identification data.

Such a feature corresponding, for example, to a plug and charge authentication, enables to authenticate the electric device preliminarily to the determination of the electricity provisioning policy.

According to an advantageous feature, electric device further storing customer data, said method further comprises the following steps, once the electric device is connected to the electricity network with the connector:
- transmitting, to the intelligent module, the customer data at the electric device,
- processing, by the intelligent module, of the customer data to determine the electricity provisioning policy.

Such a customization of the provisioning policy using customer data, being stored in the secure electronic container or elsewhere can be advantageous in some application like loyalty processing and others.

To the accomplishment of the foregoing and related ends, one or more embodiments comprise the features hereinafter fully described and particularly pointed out in the claims.

### BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
- Figure 1 schematically shows an exemplary environment where the invention is advantageously implemented;
- Figure 2 schematically shows exchanges between a secure electronic container and an intelligent module of the invention;
- Figure 3 shows a flowchart of the method of the invention.

### DETAILED DESCRIPTION OF EMBODIMENTS OF THE INVENTION

For a more complete understanding of the invention, the invention will now be described in detail with reference to the accompanying drawing. The detailed description will illustrate and describe what is considered as a preferred embodiment of the invention. It should of course be understood that various modifications and changes in form or detail could readily be made without departing from the scope of the invention. It is therefore intended that the invention may not be limited to the exact form and detail shown and described herein, nor to anything less than the whole of the invention disclosed herein and as claimed hereinafter. The same elements have been designated with the same references in the different drawings. For clarity, only those elements and steps which are useful to the understanding of the present invention have been shown in the drawings and will be described.

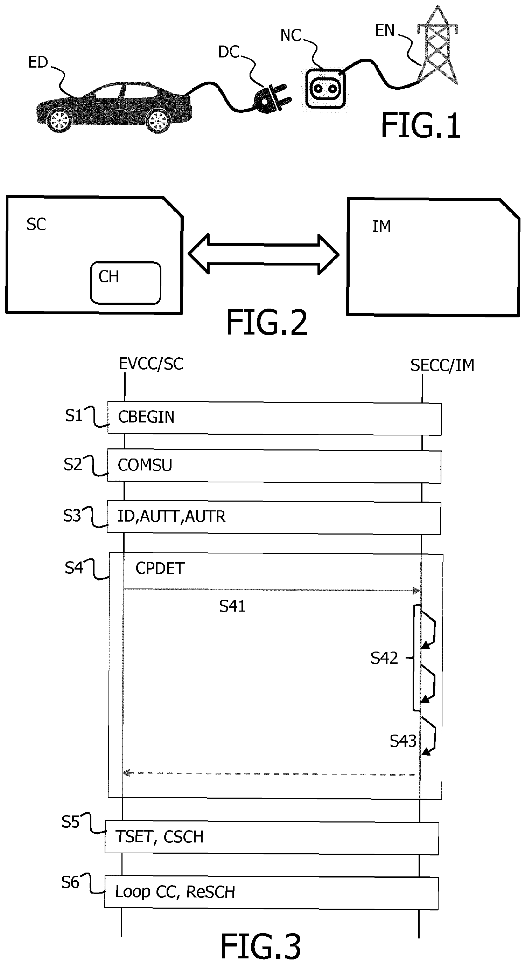

Figure 1 schematically shows an exemplary environment where the invention is advantageously implemented. In this environment, an electric device ED, here a car, having a connector DC is adapted to be connected to an electricity network EN provisioning electricity via a complementary connector NC serving as charging station.

Connection of the electric device ED can be of many kinds. It can be a mechanical plug of a given standard or not, an inductive electricity provisioning connector or any other kind of connector adapted for the provisioning of electricity, thus electric energy, to the electric device.

The electric device ED can also be of many kinds. It can be a car as shown but also many other kind of devices for which electricity providers would benefit to be able to apply various policies of provisioning.

For example, a different electricity provisioning billing policy will be different for an old heater having low yield and consuming a lot of energy and for a brand new high-yield heater. The invention enables electricity provider to encourage good energy management also at the level of individual behavior and consumption.

For the need of the invention, the electric device ED has a secure electronic container SC schematically shown on figure 2. This secure electronic container SC stores characteristics CH of the electric device ED.

A secure electronic container SC of the invention can be a separated component, like a chip soldered in the electric vehicle EV, a secure partition in a data memory, a part of a Trusted Execution Environment TEE, or any kind of the state-of-art container that can be secured to be unalterable.

Advantageously the transmission of the stored data is also protected using encryption.

At least a part of the characteristics CH is unalterable and permanent. No modification can be performed by anyone except by an official authority if necessitated. The encryption is particularly interesting for PLC or wireless transmission of data for privacy reasons. This is one of the features of the TLS link used in the plug & charge standard.

Here a mutual authentication between the charging station and the vehicle enables the vehicle to know that it communicates with a real charging station. Such a mutual authentication enables to implement an access control to the characteristics CH of the vehicle, especially when the VIN is a part of these characteristics.

For a vehicle, the unalterable and permanent characteristics are the technical ones of the registration of the vehicle. These are data that are controlled, legal and attached to the vehicle. It comprises the vehicle identification number as assigned by a registration authority. The ones that can be modified by an official authority are a modification of the vehicle, from 2 seats to 5 seats for example, addition of a characteristics, for example a number of wheels, a rental car type etc.... They are also controlled and may be changed only by specific authorities if ever needed.

The secure electronic container SC can be of many kinds. It can be a physical component, like an embedded chip, a soldered physical component, or software secured "container", like encrypted data, a trusted environment...

For the need of the invention, it is also required that the electricity network has an intelligent module IM as schematically shown on figure 2. The secure electronic container SC is adapted to be connected to the intelligent module IM of the electricity network EN. This connection can be realized via the physical plug of the electric device ED to the electricity network EN, typically a PLC data transfer in this case. It can also be a Bluetooth connection to transfer data, the Bluetooth connection being active as soon as the electric device is in the vicinity to a connector to the electricity network. It can thus also be data over inductive electricity transfer, wifi, NFC, wireless USB, UWB (Ultra Wide Band) or a combination of thereof.

In any case, the intelligent module IM is connected to the secure electronic container SC as soon as the electric device ED is positioned to receive electricity from the electricity network EN.

The intelligent module IM is adapted to make a retrieval request to the secure electronic container SC for a retrieval of characteristics CH of the electric device ED. Such a retrieval/transmission can necessitate that the intelligent module IM has cryptographic means CM to decrypt the characteristics CH and/or to "open" the secure electronic container SC. Typically, here, a mutual authentication is performed.

The invention here implements state-of-the-art solutions available for such needs.

Also the state of the art for EV charging is the plug and charge (P&C) protocol which relies on Power Line Communication (PLC) technology to exchange data between EV and CP directly over the power cable. P&C protocol is used to perform mutual authentication between the EV and the CP, setting billing arrangement and technical loading details such as accepted loading power, duration, etc. the plug and charge protocol is thus the state of the art to automatically negotiate a charging session between an EV and a CP.

Figure 3 shows a flowchart of the method of the invention as implemented in an environment where such a "plug and charge" feature according to standardized requirements as disclosed in ISO 15118-2:2014 specification is also implemented.

Such an environment is typically the one of an electric vehicle that is plugged to the electricity network to be supplied in electricity.

Electric vehicles of this kind have an electric vehicle communication controller EVCC (as generally designated in standards) that is, in the invention, linked to the secure electronic container SC. The secure electronic container SC can be included in the electric vehicle communication controller EVCC or adapted to exchange data with the EVCC. The invention necessitates that the network comprises a supply equipment that is here a plug NC, this supply equipment having a supply equipment communication controller SECC (as generally designated in standards) which is the intelligent module IM of the invention.

Security credentials are advantageously offline, or semi-offline, exchanged with a secondary actor which is advantageously an official authority. Typically Online Certificate Status Protocol responses, Certificate Revocation Lists and certificates are thus exchanged.

Then, once the vehicle is plugged, a first step S1 to begin the charging process CBEGIN is performed. Then a communication setup COMSU step S2 is performed according to the standardized requirements. An IP-based connection is thus established as well as a TLS session using previously provided certificates. Then a step S3 of identification, authentication and authorization ID, AUTT, AUTR is performed. This step S3 is also based on certificates and leads to the authorization or the refusal of the electricity supply.

So far, in the "plug and charge" standard, the TLS establish session part allows the EVCC to authenticate the SECC thanks to the Electric Vehicle Supply Equipment EVSE certificate but not the other way round. The ISO 15118-20 will allows the authentication of the EVCC by the SECC in the future.

The sequence Identification, authentication au authorization allows to check the EV has a valid contract certificate related to an electricity supply agreement.

The invention considering vehicle characteristic and policy checking intervenes after the above exposed sequence of steps. Then a step S4 of determination of a charging policy CPDET is thus performed according to the invention.

With the invention, is attached to each vehicle a secured set of data describing some of its characteristics such as its model type, weight, type of the vehicle, i.e. personal car, public transport, maximum number of passengers, maximum range, maximum speed, maximum load, etc....

This determination of a charging policy step, itself comprises several steps of the invention. In a first step S41, the characteristics CH as stored in the secure electronic container SC are sent to the intelligent module IM/SECC.

This step can be a voluntary submission of the electric vehicle charging controller EVCC but it can also be a transmission request of the characteristics CH by the intelligent module IM. In this case, in the P&C protocol, the intelligent module SECC is a server and the charging controller EVCC is a client.

Typical vehicle characteristics CH would be an XML data signed, for example using XML-DSIG, by the car manufacturer and the local authority for vehicle registration.

Example signed vehicle characteristics, with one signature only:

```
  <?xml version="1.0" encoding-"ISO-8859-1"?>
  <Envelope xmlns="urn:iso:std:iso:15118...">
     <Body>
      <VIN>3B7HF13YXWG209744</VIN>
      <Weight>800</Weight>
      <Type>Passenger car</Type>
      <Seats>4</Seats>
     </Body>
     <Signature xmlns="http://www.w3.org/2000/09/xmldsig#">
      <SignedInfo>
        <CanonicalizationMethod Algorithm-"http://www.w3.org/TR/2001/REC-xml-cl4n-
        20010315" />
        <SignatureMethod Algorithm="http://www.w3.org/2000/09/xmldsig#rsa-shal" />
        <Reference URI="">
          <Transforms>
            <Transform Algorithm="http://www.w3.org/2000/09/xmldsig#enveloped-
            signature" />
          </Transforms>
          <DigestMethod Algorithm-"http://www.w3.org/2000/09/xmldsig#shal" />
          <DigestValue>...</DigestValue>
        </Reference>
      </SignedInfo>
      <SignatureValue>
      </SignatureValue>
      <KeyInfo>
        <KeyValue>
           <RSAKeyValue>
             <Modulus>
             </Modulus>
             <Exponent>...</Exponent>
           </RSAKeyValue>
        </KeyValue>
      </KeyInfo>
     </Signature>
  </Envelope>
```

The characteristics CH are then processed by the intelligent module SECC in a step S42. This step advantageously comprises an integrity check IC, an authenticity check AC and a step S43 of computation of the charging policy CPC considering the characteristics CH as an input to its charging policy according to local laws and regulations. For example a government may set a tax on EV charging depending on the weight per passenger ratio. In addition to tax policy, prioritization of night charging may be influenced by the EV characteristics.

The integrity check IC necessitates Original Equipment Manufacturer certificates to be correct as well as local authority certificates. It is typically a signature verification using the certificates from the car manufacturer and the local authority for vehicle registration.

The check authenticity step AC also requires the both certificates and consists in checking that the vehicle identification number in the vehicle characteristics matches with the VIN in the EV certificate that has been check according to TLS mutual authentication as in ISO 1541118-20.

The charging policy computation step is an algorithm that takes into account the vehicle characteristics and the local charging regulations to output the proposed charging policy CP for the vehicle.

The computed charging policy is then optionally returned to the electric vehicle charging controller EVCC. In any case, the determined charging policy CP is applied to the provision of electricity.

Below is an example of a local charging regulation:

```
  If car == passenger car then
   If weight per seat > 200 then
          price correction = 2 // malus for heavy vehicles
        else if 100 < weight per seat <= 200
          price correction = 1
        else
          price correction = 0.5 // bonus for light vehicles
```

So in our example, the price would be unchanged as, referring to the above XML example where weight = 800 for 4 passenger, meaning 200 per seat, price correction is 1, so, typically, no malus or bonus is applied to the base price.

To maintain this process over the time and adapt to local regulation evolution, updated local charging regulation could be remotely updated into the intelligent module SECC.

The invention allows government and local authorities to apply charging policies that incentivize or disincentivize certain categories of EV in a secure and automated way.

If needed, during the car life, the characteristics may be updated to include a new parameter relevant for new charging policies mandated by the law. This update can be done by the car manufacturer according to state of the art Over The Air Update protocols.

Similarly, thus, the applicable charging policies in CP may we remotely updated by the Charge Point Operator (CPO) according to local laws and regulations changes.

After the steps of the invention and the determination of the charging policy, a standardized step S5 of target setting TSET and charge scheduling CSCH is performed according to the determined charging policy. Then a step S6 where a charge control loop Loop CC is performed with re-scheduling as far as needed is performed while electricity is provided to the electric device ED.

In the above detailed description, reference is made to the accompanying drawings that show, by way of illustration, specific embodiments in which the invention may be practiced. These embodiments are described in sufficient detail to enable those skilled in the art to practice the invention. The above detailed description is, therefore, not to be taken in a limiting sense, and the scope of the present invention is defined only by the appended claims, appropriately interpreted.

## Claims

1. Electric device (ED) having connector (DC) to be connected, for electricity provisioning, to an electricity network (EN) having an intelligent module (IM), said electric device (ED) having further at least a secure electronic container (SC) adapted to be connected to the intelligent module (IM) of the electricity network (EN) when the electric device (ED) is connected to the electricity network (EN), said secure electronic container (SC) storing characteristics of the electric device (ED) to be transmitted to the intelligent module (IM) when the electric device (ED) is connected to the electricity network (EN), said characteristics (CH), once transmitted, being processed by the intelligent module (IM) to determine an electricity provisioning policy to be applied to the electricity provisioning subsequent to the connection of the electric device (ED) for electricity provisioning.

2. Electric device (ED) according to claim 1, wherein stored characteristics (CH) are permanent and unalterable data verified by an authority.

3. Electric device (ED) according to one of preceding claims, said electric device (ED) being a vehicle having electricity motorization, the intelligent module (IM) of the electric network (EN) is a charging station (NC) and the electricity provisioning policy is a charging policy to be applied by the charging station (NC) to the charge subsequent to the connection of the electric device (ED).

4. Electric device (ED) according to one of preceding claims, wherein the secure electronic container (SC) is connected to the intelligent module (IM) via one of the following technology:
- Bluetooth
- PLC (Power Line Communication),
- Wifi,
- Ultra wide band,
- Wireless USB.

5. Electric device (ED) according to one of the preceding claims, wherein stored characteristics (CH) of the electric device (ED) includes at least one of the following:
- Mass of the vehicle,
- Battery type,
- Number of passengers,
- Max freight mass,
- Special purpose of the vehicle, typically an emergency vehicle,
- Maximal speed.

6. Electric device (ED) according to one of the preceding claims, wherein authentication and identification data are also stored in the electric device (ED) for a mutual authentication of the electric device (ED) and of the electricity network (EN).

7. Electric device (ED) according to claim 6, wherein said secure electronic container (SC) stores the authentication and identification data that are also transmitted to the intelligent module (IM) when the electric device (ED) is connected to the electricity network (EN), said intelligent module (IM) having cryptographic means adapted to process authentication and identification data to perform mutual authentication with the electric device (ED) identified by the identification data.

8. Electric device (ED) according to one of the preceding claims, wherein customer data are also stored in the electric device (ED) for further customization of the electricity provisioning policy.

9. Electric device (ED) according to claim 8, said secure electronic container (SC) stores the customer data that are also transmitted to the intelligent module (IM) when the electric device (ED) is connected to the electricity network (EN), said intelligent module (IM) further processing the customer data to determine the electricity provisioning policy.

10. Intelligent module (IM) implemented in an electricity network (EN), said intelligent module (IM) being adapted to connect to a secure electronic container (SC) of an electric device (EC) having a connector (DC) to connect to the electricity network (EN), when the electric device (ED) is connected to the electricity network (EN), said intelligent module (IM) being adapted to:
- retrieve characteristics (CH) of the electric device (ED) from said secure electronic container (SC) when the electric device (ED) is connected to the electricity network (EN),
- process retrieved characteristics (CH) of the electric device (ED) to determine an electricity provisioning policy to be applied to the electricity provisioning subsequent to the connection of the electric device (ED) for electricity provisioning.

11. Intelligent module (IM) according to claim 10, said electric device (ED) further storing authentication and identification data, said intelligent module (IM) is adapted to further retrieve the authentication and identification data, said intelligent module (IM) further having cryptographic means to perform mutual authentication with the electric device (ED) identified by the identification data.

12. Intelligent module (IM) according to one of claims 10 and 11, said electric device (ED) further storing customer data, said intelligent module (IM) is adapted to further retrieve the customer data, said intelligent module (IM) further processing the customer data to determine the electricity provisioning policy.

13. Method to determine an electricity provisioning policy to be applied to the electricity provisioning subsequent to a connection to an electricity network (EN) of an electric device (ED) having a connector (DC) and at least a secure electronic container (SC) storing characteristics (CH) of the electric device (ED), said electricity network (EN) having further an intelligent module (IM), said method comprising the steps of, once the electric device (ED) is connected to the electricity network (EN) with the connector (DC):
- connection (S1,S2) of the intelligent module (IM) of the electricity network (EN) with the secure electronic container (SC) of the electric device (ED), once the connector (DC) of the electric device (ED) is connected to the electricity network (EN) for electricity provisioning,
- retrieving (S41) stored characteristics (CH) from said secure electronic container (SC) to the intelligent module (IM),
- processing (S42) retrieved characteristics (CH) by the intelligent module (IM),
- determining (S43), according to the processing of the retrieved characteristics (CH), an electricity provisioning policy to be applied to the electricity provisioning subsequent to the connection of the electric device (ED) for electricity provisioning.

14. Method according to claim 13, said electric device (ED) further storing authentication and identification data and said intelligent module (IM) having cryptography means, said method further comprises the following preliminary steps, once the electric device (ED) is connected to the electricity network (EN) with the connector (DC):
- retrieving, at the intelligent module (IM), the authentication and identification data from the electric device (ED),
- using (S3) the authentication and identification data, performing a mutual authentication with the electric device (ED) as identified by the identification data.

15. Method according to one of claims 13 and 14, said electric device (ED) further storing customer data, said method further comprises the following steps, once the electric device (ED) is connected to the electricity network (EN) with the connector (DC):
- retrieving, at the intelligent module (IM), the customer data from the electric device (ED),
- processing, by the intelligent module (IM), of the customer data to determine the electricity provisioning policy.
